# EUROPÄISCHE PATENTSCHRIFT

(11) **EP 0 818 003 B1**
(45) Veröffentlichungstag und Bekanntmachung des Hinweises auf die Patenterteilung: **16.09.1998**
(21) Anmeldenummer: 96900837.4
(22) Anmeldetag: 22.01.1996
(51) Int. Cl.: G06F 11/34

(54) **VERFAHREN ZUR LASTMESSUNG**
LOAD MEASUREMENT METHOD
PROCEDE DE MESURE DE CHARGE

(30) Priorität: 27.03.1995 DE 19511252
(43) Veröffentlichungstag der Anmeldung: 14.01.1998
(73) Patentinhaber: Siemens Nixdorf Informationssysteme AG, 33106 Paderborn (DE)
(72) Erfinder: HEMKER, Josef, D-33102 Paderborn (DE); PFEIFER, Dirk, D-33142 Büren (DE)
(74) Vertreter: Epping, Wilhelm, Dr.-Ing.
(86) Internationale Anmeldenummer: DE9600086
(87) Internationale Veröffentlichungsnummer: WO9630835

(56) Entgegenhaltungen:
- USENIX ASSOCIATION. PROCEEDINGS OF THE 6TH SYSTEMS ADMINISTRATION CONFERENCE (LISA VI), 19. - 23.Oktober 1992, LONG BEACH, CA, US, Seiten 33-38, XP000569859 H.L. STERN ET AL. : "NFS Performance and Network Loading"
- PROCEEDINGS OF THE SUMMER 1993 USENIX CONFERENCE, 21. - 25.Juni 1993, CINCINNATI, OH, US, Seiten 111-128, XP000569865 M. WITTLE ET AL.: "LADDIS: The Next Generation in NFS File Server Benchmarking"
- PROCEEDINGS OF THE IEEE, Bd. 81, Nr. 8, August 1993, NEW YORK US, Seiten 1151-1165, XP000399855 P.M. CHEN ET AL.: "Storage Performance - Metrics and Benchmarks"

## Beschreibung

### Technisches Gebiet

Das Verfahren betrifft den Betrieb von Computersystemen zur Leistungsmessung in vernetzten Systemen.

### Stand der Technik

Bei der Planung und Installation von vernetzten Computersystemen ist eine Evaluation oder Erprobung des geplanten Systems zweckmäßig, um herauszufinden, ob die geplante Anlage die geforderte Leistung auch erreicht. Hierzu ist die Anzahl der pro Sekunde ausführbaren Befehle einer Zentraleinheit meist nicht ausreichend. Eine Leistungsmessung mit einstellbaren Parametern ist dafür notwendig.

Hierzu bedient man sich einer Testinstallation und mehrerer Lastgeneratoren, die eine zwar synthetische, aber der geplanten Anwendung ähnliche Last erzeugen. Damit kann geprüft werden, ob die geplante Anlage eine vorgegebene Lastsituation bewältigen kann.

Über diese rein binäre Aussage hinaus ist es natürlicherweise das Ziel einer Leistungsmessung, mittels quantitativer Aussagen eine Information zu bekommen, welches Lastprofil, insbesondere welche gleichzeitig aktive Anzahl von durch Lastgeneratoren simulierten Belastungen denn eine vorgegebene Anlage auslastet. Insbesondere wird damit sichtbar, welche zusätzliche Last zu der spezifizierten die Anlage bewältigen kann.

Eine erste Lösung besteht darin, eine Anzahl von Lastgeneratoren gemeinsam einzuschalten und sukzessive zu aktivieren, bis die Belastungsgrenze erreicht ist. Es hat sich jedoch gezeigt, daß die hierdurch gewonnenen Zahlen zu fehldimensionierten Systemen führten. Dies wurde bislang darauf zurückgeführt, daß die Lastgeneratoren eben nicht realistisch genug seien, und die erhaltenen Leistungszahlen wurden dementsprechend durch Schätzung korrigiert.

Es stellte sich jedoch heraus, daß Lastgeneratoren durchaus geeignet sind, präzise, realistische und vergleichbare Leistungsmessung durchzuführen, wenn zur Ermittlung der Leistungszahlen das erfindungsgemäße Verfahren verwendet wird.

### Darstellung der Erfindung

Die Erfindung gemäß dem in Anspruch 1 beanspruchten Verfahren besteht darin, zunächst alle Lastgeneratoren zu aktivieren, so daß eine Überlastsituation entsteht. Danach werden jeweils mehrere Lastgeneratoren, vorzugsweise fünf, gleichzeitig deaktiviert, bis die Überlastsituation verschwindet. Danach werden einzelne Lastgeneratoren sukzessive reaktiviert. Sobald die Überlastsituation wieder auftritt, ist die Anzahl der Lastgeneratoren vor diesem Punkt das Maß für die Leistungsfähigkeit des Computersystems bezüglich des durch die Lastgeneratoren definierten Lastprofils. Die in dem jeweils vorherigen Schritt deaktivierten Clients werden dabei vollständig terminiert, wenn weitere Clients deaktiviert werden.

### Kurzbeschreibung der Zeichnungen

Es zeigen
Fig. 1 ein Blockschaltbild einer Meßanordnung,
Fig. 2 ein Flußdiagramm für den Verfahrensablauf.

### Detaillierte Beschreibung der Erfindung

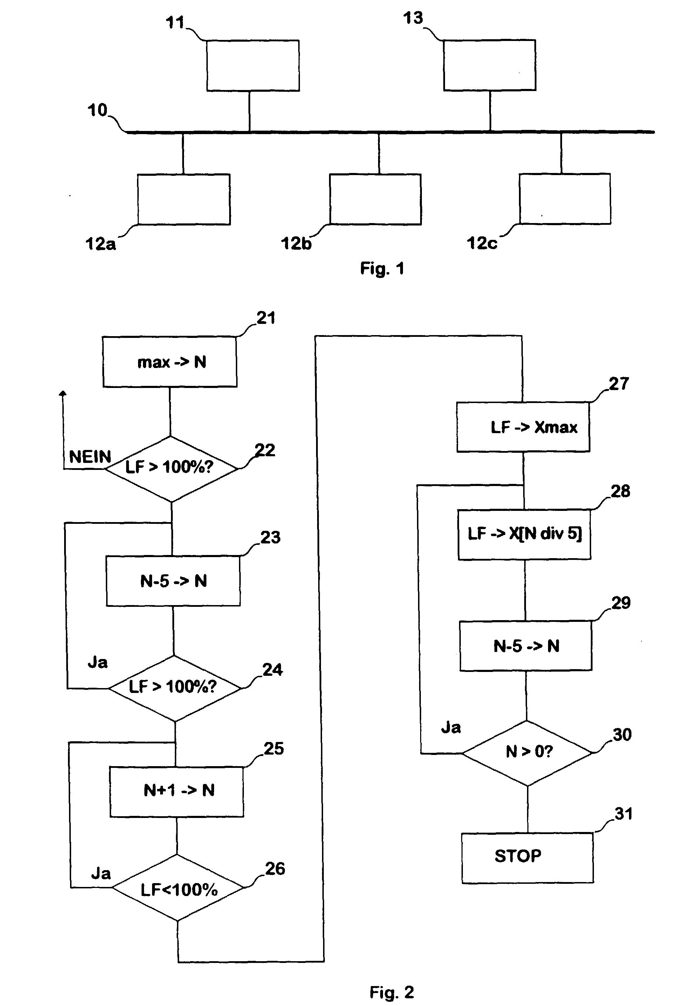

Fig. 1 zeigt ein Blockschaltbild für eine Leistungsmessung von Client-Server-Installationen. Ein Netzwerk 10, beispielsweise Ethernet oder Token Ring, verbindet verschiedene Rechner. Ein als Server bezeichneter Rechner 11 ist der zu vermessende Rechner, dessen Leistungszahl ermittelt werden soll. Zu diesem Zweck sind weitere, Clients genannte Rechner 12a, 12b und 12c an das Netzwerk derart angeschlossen, daß sie mit dem Server kommunizieren können. Die Anzahl der Clients ist in der Regel erheblich größer als dargestellt und kann zweihundert und mehr bei sehr leistungsstarken oder mehrereren Servern betragen. Ein Server kann Clients auch in mehreren verschiedenen Netzen bedienen. In der Regel wird der Server mit einem Time-Sharing Betriebssystem betrieben. Diese werden unter verschiedenen Marken vertrieben, welche in der Regel auf "x" oder "ix" enden. Die Clients sind meistens Personal Computer, die mittels eines passenden Betriebssystems für Einzelnutzer betrieben werden, das überwiegend DOS genannt wird. Die Kommunikation zwischen Client und Server erfolgt über Netzwerk-Protokolle, von denen TCP/IP und UDP/IP bekannt und in den RFC-Dokumenten dokumentiert sind, von denen einige Ausgaben im DDN Protocol Handbook abgedruckt sind.

Ferner ist ein Überwachungsrechner 13 vorhanden, der den jeweiligen Betriebszustand des Servers bzw. der Clients ermitteln kann und die Clients in noch näher zu beschreibender Weise steuert. Dies erfolgt beispielsweise durch Kommunikation über Dateimanipulationen von Dateien auf einem Server, die gleichzeitig vom Client und Überwachungsrechner bearbeitet werden. Anstelle eines Servers können selbstverständlich auch mehrere Server parallel betrieben werden.

Die zu ermittelnde Leistungszahl soll angeben, wieviele Clients von einem Server unter gegebenen Randbedinungen bedient werden können. Die Randbedingungen sind dadurch festgelegt, daß eine Anzahl von Elementaroperationen bestimmt wird. Wird beispielsweise ein entferntes Dateisystem (remote file system) wie NFS (Network File System) verwendet, welches seinerseits das Protokoll UDP/IP verwendet, dann besteht eine mögliche Liste der Elementaroperationen aus: Datei öffnen, Datei anlegen, 1k Bytes in die Datei schreiben, 1k Bytes aus der Datei lesen, in der Datei positionieren, Datei schließen, Datei löschen. Zu jeder dieser Elementaroperationen wird angegeben, mit welcher Häufigkeit diese ausgewählt werden soll. Beispielsweise 5% Datei öffnen, 60% lesen, 30% schreiben und 5% schließen. Fernerhin wird eine obere Schranke für die Zeit vorgegeben, die die Abarbeitung einer gleichfalls angegebenen Anzahl von Elementaroperationen nicht überschreiten soll. Beispielsweise sollen 1000 zufällig mit der genannten Wahrscheinlichkeit ausgewählte Operationen in einer vorgegebenen Nominalzeit von beispielsweise 100 Sekunden abgeschlossen werden können. Werden dafür nur 25 Sekunden benötigt, so liegt ein Lastfaktor von 25% für diesen Client vor. Werden dafür 120 Sekunden benötigt, so liegt ein Lastfaktor von 120% und eine Überlastsituation vor. Weiterhin wird eine Wiederholfrequenz vorgegeben, deren Periodenzeit von beispielsweise 200 Sekunden über der Nominalzeit liegt. Die Restzeit zwischen Nominalzeit oder tatsächlicher Ausführungszeit und Ende der Wiederholperiode ist der Client inaktiv. Dies modelliert die Reaktions- und Bearbeitungszeiten eines Benutzers.

Aus den Lastfaktoren der Clients wird als arithmetisches oder geometrisches Mittel, Median oder Maximum der Gesamtlastfaktor des Servers gebildet.

Um den Gesamtlastfaktor zu messen, kann in einem ersten Betriebsverfahren das System insgesamt derart eingeschaltet werden, daß der Server 11 auf Aufträge wartet und die Clients 12a..c betriebsbereit und angemeldet sind, also mit dem Überwachungsrechner 13 kommunizieren, jedoch noch keine Lastprofile ausführen. Der Überwachungsrechner gibt nacheinander jeweils einem weiteren Client den Auftrag, das vorgegebene Lastprofil auszuführen und den Lastfaktor zurückzumelden und ermittelt daraus den Lastfaktor des Servers. Die so ermittelten Zahlen haben sich jedoch in der Praxis als suboptimal erwiesen, indem sie eine zu hohe Last vortäuschen.

Eine wesentliche Verbesserung konnte nach dem in Fig. 2 skizzierten Verfahren erreicht werden. Die Messung wird in Schritt 21 damit begonnen, daß alle Clients aktiviert werden. Damit wird ein Gesamtlastfaktor des bzw. der Server über 100% erreicht, der in Schritt 22 geprüft wird. Nunmehr vermindert der Überwachungrechner im Schritt 23 die Anzahl der Clients durch Deaktivierung mehrerer gleichzeitig. Eine Zahl von fünf für dieses Dekrement hat sich als optimal herausgestellt. Dabei werden zwei Stufen der Inaktivität unterschieden: das Pausieren und die Terminierung. Bei dem Pausieren wird lediglich die Ausführung des Lastprofils angehalten; das die Last simulierende Programm bleibt jedoch über das Netzwerk mit Server und Überwachungsrechner verbunden. Bei der Terminierung wird das die Last simulierende Programm vollständig beendet; der Client wird effektiv vom Netz getrennt. Bei der Verminderung der Zahl der Clients in Schritt 23 wird insofern zweistufig vorgegangen, als jeder Client zunächst nur pausiert und, wenn ab dem zweiten Durchlauf die Anzahl der pausierenden das Dekrement überschreitet, terminiert wird.

Wird auf diese Art der Gesamtlastfaktor kleiner als 100%, in Schritt 24 festgestelt, dann werden die pausierenden Clients sukzessive und einzeln in Schritt 25 wieder aktiviert und so mittels der Abfrage 26 die Anzahl der Clients für 100% Gesamtlastfaktor bestimmt, welche in Schritt 27 in der Variablen Xmax gespeichert wird.

Um mehr Datenmaterial für Vergleiche zu erhalten, werden anschließend weitere Messungen durchgeführt. Hierzu werden zunächst soviele Clients deaktiviert, daß die Anzahl der verbleibenden ein Vielfaches des Dekrements ist, und die Gesamtleistungszahl gemessen. Danach werden jeweils die durch das Dekrement bestimmte Anzahl von Clients terminiert und die Leistungszahl bestimmt, so daß sich eine Leistungskurve mit einer durch das Dekrement bestimmten Anzahl von Stützstellen ergibt, die bei unterschiedlichen Konfigurationen dadurch gut vergleichbar sind. Dies erfolgt in den Schritten 28 bis 31.

Eine Erweiterung des Verfahrens geht nach dem Ermitteln der Leistungzahl 100% so vor, daß sukzessive die Clients pausiert und deaktiviert werden, sobald die Anzahl der pausierenden das Dekrement unterschreitet. Es werden also immer die dem Dekrement entsprechende Anzahl von Clients pausierend gehalten und also im weiteren Verlauf immer ein Client pausiert und ein pausierender gleichzeitig terminiert.

Als Alternative wird die Anzahl der nicht terminierten Clients immer als Vielfaches des Dekrements gehalten. Es werden also, bei einem Dekrement von fünf, nacheinander einzeln Clients pausiert und, nachdem fünf pausieren, diese fünf deaktiviert. Das ergibt eine charakteristische Kurve, aus der die Belastung der Konfiguration durch pausierende Clients ersehen werden kann.

Es ist möglich, daß zu Beginn der Messung bei Aktivierung aller Clients eine Überlast nicht erreicht werden kann. Sofern möglich, werden dann weitere Clients hinzugenommen.

Alternativ dazu kann jedoch auch eine größere Anzahl von Clients modelliert werden, ohne daß das vorgegebene Lastprofil modifiziert werden muß. Hierzu wird die Wiederholperiode auf Anweisung des Überwachungsrechners um einen auf dem Überwachungsrechner bestimmten Faktor verkürzt, bis eine Überlast des oder der Server erreicht wird. Damit kann die Leistungsgrenze einer Konfiguration vermessen werden, ohne daß die der Leistungsgrenze entsprechende Zahl von Clients physisch vorhanden sein muß. Bezogen auf das Beispiel wird die Wiederholperiode von 200 Sekunden auf 180 Sekunden reduziert. Sind 50 Clients physisch vorhanden, so entspricht die Last der von 55 Clients. Für die Messungen durch Deaktivieren von Clients wird dann zunächst die Wiederholperiode mit einem Faktor erhöht, der der gewünschten Anzahl von logischen Clients entspricht. Im Beispiel wird daher als erster Schritt die ursprüngliche Wiederholrate wiederhergestellt und dann in Schritte in 5 Sekunden wieder reduziert, bis die Überlast erreicht ist. Ist die ursprüngliche Wiederholperiode erreicht, wird in oben beschriebener Art vorgegangen.

## Patentansprüche

1. Verfahren zum Betrieb von Computern zur Bestimmung einer Leistungszahl eines eine Computerleistung erbringenden Servers (11), der diese Leistung durch Ausführung von in einem vorgegebenen Lastprofil enthaltenen Aufträgen von mehreren, die Leistung konsumierenden Clients (12a, 12b, 12c) erbringt, mit Meßmitteln (13), die einen Gesamtlastfaktor zu bestimmen vermögen und den Schritten:
a) Aktivierung aller Clients mit demselben vorgegebenen Lastprofil, so daß der Gesamtlastfaktor größer als 100% ist,
b) gleichzeitige Deaktivierung einer durch einen Dekrementfaktor n vorbestimmten Anzahl von Clients, wobei n>1, und gegebenenfalls Wiederholung dieses Schrittes, bis der Gesamtlastfaktor kleiner als 100% ist,
c) Sukzessive Reaktivierung jeweils eines der deaktivierten Clients, bis der Gesamtlastfaktor erneut 100% überschreitet die Anzahl der so ermittelten Clients ist die gemessene Leistungszahl des Servers in Bezug auf das Lastprofil.

2. Verfahren nach Anspruch 1 mit den zusätzlichen Merkmalen:
b1) eine erste Deaktivierung eines Clients führt zu einer Pausierung, in welcher die Ausführung des Lastprofils in dem Client angehalten ist, ohne diesen in Bezug auf das Netzwerk abzumelden,
b2) eine zweite Deaktivierung führt zu einer Terminierung, in der das Programm für die Ausführung des Lastprofiles beendigt wird und insbesondere die Netzwerkverbindungen abgemeldet werden,
b3) sofern die Anzahl der pausierenden Clients das Dekrement übersteigt, werden eine entsprechende Anzahl von Clients terminiert, so daß die Anzahl der pausierenden Clients nicht größer als das Dekrement ist.

3. Verfahren nach Anspruch 2, in dem nach Ermittlung der Leistungszahl für 100% Gesamtlastfaktor weitere Gesamtlastfaktoren durch Deaktivierung von Clients bestimmt werden, wobei eine durch das Dekrement bestimmte Anzahl von Clients gleichzeitig terminiert werden und die Anzahl der aktiven Clients stets ein Vielfaches des Dekrements ist.

4. Verfahren nach Anspruch 2, in dem nach Ermittlung der Leistungszahl für 100% Gesamtlastfaktor weitere Gesamtlastfaktoren durch Deaktivierung von Clients bestimmt werden, wobei sukzessive einzelne Clients pausiert werden und durch Terminierung die Anzahl der pausierenden Clients stets gleich dem Dekrement gehalten wird.

5. Verfahren nach einem der Ansprüche 1, 2 oder 3, wobei die Lastprofile aus eine Last erzeugenden Phasen und Wartephasen zusammengesetzt sind und für den Fall, daß im Schritt a) kein Gesamtlastfaktor über 100% erreicht werden kann, die Wartephasen verkürzt werden, bis der Gesamtlastfaktor 100% übersteigt.

## Claims

1. Method for operating computers in order to determine a performance figure of a server (11) which provides a computer performance, the server providing this performance by executing jobs, contained in a predetermined load profile, of a plurality of clients (12a, 12b, 12c) which utilize the performance, having measuring means (13), which can determine a total load factor, and the steps:
a) activation of all of the clients with the same predetermined load profile, with the result that the total load factor is greater than 100%,
b) simultaneous deactivation of a number, the number being prescribed by a decrement factor n, of clients, where n > 1, and, if appropriate, repetition of this step, until the total load factor is less than 100%,
c) successive reactivation of one of the deactivated clients each time, until the total load factor once more exceeds 100%; the number of clients determined in this way is the measured performance figure of the server with regard to the load profile.

2. Method according to Claim 1, having the additional features:
b1) a first deactivation of a client leads to pausing, where the execution of the load profile in the client is halted, without logging the latter off from the network,
b2) a second deactivation leads to disconnection, where the program for executing the load profile is terminated and, in particular, the network connections are logged off,
b3) if the number of pausing clients exceeds the decrement, a corresponding number of clients are disconnected, with the result that the number of pausing clients is not greater than the decrement.

3. Method according to Claim 2, in which, after determination of the performance figure for a total load factor of 100%, further total load factors are determined by deactivating clients, a number of clients which is determined by the decrement being disconnected simultaneously, and the number of active clients always being a multiple of the decrement.

4. Method according to Claim 2, in which, after determination of the performance figure for a total load factor of 100%, further total load factors are determined by deactivating clients, individual clients being paused successively and, by means of disconnection, the number of pausing clients always being kept equal to the decrement.

5. Method according to one of Claims 1, 2 or 3, the load profiles being composed of phases which generate a load and waiting phases, and, when it is not possible to achieve a total load factor of over 100% in step a), the waiting phases being reduced until the total load factor exceeds 100%.

## Revendications

1. Procédé pour faire fonctionner des ordinateurs pour déterminer un indice de puissance d'un serveur (11) qui apporte une puissance d'ordinateur et qui apporte cette puissance en exécutant des instructions contenues dans un profil de charge prescrit provenant de plusieurs clients (12a,12b,12c) consommant la puissance, avec des moyens (13) de mesure qui permettent de déterminer un facteur de charge total et les étapes:
a) activation de tous les clients par le même profil de charge prescrit, si bien que le facteur de charge total est supérieur à 100%,
b) en même temps, désactivation d'un nombre de clients prédéterminé par un facteur n de décrémentation, n > 1, et éventuellement répétition de cette étape jusqu'à ce que le facteur de charge total soit inférieur à 100%,
c) réactivation successive chaque fois de l'un des clients désactivés, jusqu'à ce que le facteur de charge total dépasse à nouveau 100%; le nombre des clients ainsi déterminés est l'indice de puissance mesuré du serveur par rapport au profil de charge.

2. Procédé suivant la revendication 1, comportant les dispositions supplémentaires:
b1) une première désactivation d'un client conduit à faire une pause, pendant laquelle la réalisation du profil de charge est maintenue chez le client, sans que le départ de ce client du réseau ne soit déclaré,
b2) une deuxième désactivation conduit à un bouclage dans lequel il est mis fin au programme prévu pour la réalisation du profil de charge et dans lequel notamment les liaisons de réseaux sont déclarées terminées,
b3) si le nombre des clients qui font une pause est supérieur au décrément, un nombre correspondant de clients sont bouclés, si bien que le nombre des clients qui font une pause n'est pas supérieur au décrément.

3. Procédé suivant la revendication 2, dans lequel, après avoir déterminé l'indice de puissance pour un facteur de charge total de 100% on détermine des facteurs de charge totaux supplémentaires en désactivant des clients, un nombre de clients déterminé par le décrément étant bouclé simultanément et le nombre des clients actifs étant toujours un multiple du décrément.

4. Procédé suivant la revendication 2, dans lequel, après avoir déterminé l'indice de puissance pour un facteur de charge total de 100%, on détermine des facteurs de charge totaux supplémentaires en désactivant des clients, des clients individuels successifs étant arrêtés et, par bouclage, le nombre des clients qui font une pause étant toujours maintenu égal au décrément.

5. Procédé suivant l'une des revendications 1, 2 ou 3, les profiles de charge étant composés de phases de production d'une charge et de phases d'attente, et dans le cas où on ne peut pas obtenir à l'étape a) un facteur de charge total supérieur à 100%, les phases d'attente étant écourtées jusqu'à ce que le facteur de charge total dépasse 100%.
